# EUROPEAN PATENT APPLICATION

(11) **EP 4 067 981 A1**
(43) Date of publication of application: **05.10.2022**
(21) Application number: 21305404.2
(22) Date of filing: 30.03.2021
(51) Int. Cl.: G02C 7/10, G02B 5/22

(54) **LENS COSMETIC APPEARANCE CUSTOMIZATION FROM VARIABLE SKIN REFLECTANCE**

(71) Applicant: Essilor International, 94220 Charenton-Le-Pont (FR)
(72) Inventor: TROTTIER-LAPOINTE, William, 94220 Charenton Le Pont (FR); MARCK, Christelle, 94220 Charenton Le Pont (FR)
(74) Representative: Plasseraud IP

(57) **Abstract**

The disclosure relates to an optical element (10) intended to be worn in front of an eye (20) of a human wearer.

The optical element comprises a dye composition configured so that, when the optical element (10) is worn by a wearer having a given skin reflectance and is illuminated by a light source from a scene (30):
- a first light beam (1) is transmitted by the optical element (10) towards the wearer, the first light beam having a first chroma,
- a second light beam (2) is transmitted by the optical element (10) towards the scene (30) after being reflected by the skin (40) of the wearer, the second light beam having a second chroma, and
- the absolute difference between the second chroma and the first chroma is greater than 6.

## Description

### FIELD OF THE INVENTION

The present invention relates in general to the field of ophthalmic optics. More specifically, the present invention relates to an optical element, a method for determining a dye composition, a method for manufacturing a dyed optical element, a use of an optical element for attenuating light, and a use of an optical element for enhancing color vision.

### BACKGROUND OF THE INVENTION

A concern in the field of optics is to provide sunglasses or lightly colored lenses where the color in transmission as seen by the wearer would be different than the one seen by observers on the outside.

That would allow providing specific looks that are fashionable or, on the contrary, hiding colors or filters.

It has been proposed to include a semi-reflective element (or mirror) on the object-side surface of a tinted optical lens. By doing so, the color of the reflected light is unaffected by the tint of the optical lens. Alternately, an optical lens may comprise a superimposition of a first layer of tinted material, a semi-reflective mirror, and a second layer of tinted material. By doing so, the reflected light has a different color than the transmitted light.

A drawback of the prior art is that although adding a mirror to an optical lens allows differentiating the inward and outward colors, such lens does not look like a colored lens to an observer.

Rather, such lens appears mainly as a colored surface as the color is specularly reflected at the surface of the lens and not diffusely reflected.

Moreover, such mirror inhibits the observer from seeing the eyes and the skin around the eyes of the wearer.

In this context, there is a need for an optical article exhibiting a color in transmission as seen by the wearer that is different from the color seen by observers on the outside, while not inhibiting the observer from seeing the eyes and skin around the eyes of the wearer.

### SUMMARY OF THE INVENTION

The invention is defined by the appended independent claims. Additional features and advantages of the concepts herein disclosed are set forth in the description which follows.

The present disclosure aims at improving the situation.

To this end, the present disclosure describes an optical element intended to be worn in front of an eye of a human wearer, the optical element comprising a dye composition comprising at least one absorptive dye, the dye composition being configured so that, when the optical element is worn by a wearer having a given skin reflectance and is illuminated by a light source from a scene:
- a first light beam is transmitted by the optical element towards the wearer, the first light beam having a first chroma in the CIE L*a*b* color space,
- a second light beam is transmitted by the optical element towards the scene after being reflected by the skin of the wearer, the second light beam having a second chroma in the CIE L*a*b* color space, and
- the absolute difference between the second chroma and the first chroma is greater than 6.

Due to leveraging the reflection spectrum of the skin and the fact that the light then passes twice in the lens, the optical element allows the color in transmission as seen by the wearer to be different than the color seen by an observer on the outside.

In an example, at least one of the first chroma and the second chroma is smaller than 10, preferably smaller than 3. In another example, the first chroma is smaller than 10, preferably smaller than 3 in the CIE L*a*b* color space and the second chroma is greater than the first chroma preferably greater than 20 in the CIE L*a*b* color space. This allows the wearer to view a scene with a less altered color perception, while the optical element appears colorful to an observer.

In this regard, another aspect of the invention relates to a use of an optical element for attenuating light incoming towards an eye of a human wearer having a given skin reflectance altering the less possible the color perception of the wearer, wherein the optical element comprises at least one absorptive dye configured so that, when the optical element is worn by the wearer and is illuminated by a light source from a scene:
- a first light beam is transmitted by the optical element towards the wearer, the first light beam having a first chroma in the CIE L*a*b* color space,
- a second light beam is transmitted by the optical element towards the scene after being reflected by the skin of the wearer, the second light beam having a second chroma in the CIE L*a*b* color space,
- the first chroma is smaller than 10, and
- the absolute difference between the second chroma and the first chroma is greater than 6.

According to an embodiment of the invention, over the 475 to 650 nm range:
- when the optical element has a luminous transmission greater than 0.8* TvD65 when exposed to light conditions corresponding to standard illuminant D65, the absolute difference between the second chroma and the first chroma is greater than 16 in the CIE L*a*b* color space,
- when the optical element has a luminous transmission is between 0.43 and 0.8^{∗} TvD65 when exposed to light conditions corresponding to standard illuminant D65, the absolute difference between the second chroma and the first chroma is greater than 15 in the CIE L*a*b* color space, and
- when the optical element has a luminous transmission is between 0.18 and 0.43^{∗} TvD65 when exposed to light conditions corresponding to standard illuminant D65, the absolute difference between the second chroma and the first chroma is greater than 10 in the CIE L*a*b* color space.

In an example, the second chroma is smaller than 10 preferably smaller than 3 in the CIE L*a*b* color space and the first chroma is greater than the second chroma preferably greater than 20 in the CIE L*a*b* color space. This allows the optical element to look colored to the wearer, but neutral or grey to an observer.

In this regard, another aspect of the invention relates to a use of an optical element for enhancing color vision of a human wearer having a given skin reflectance, wherein the optical element comprises at least one absorptive dye configured so that, when the optical element is worn by the wearer and is illuminated by a light source from a scene:
- a first light beam is transmitted by the optical element towards the wearer, the first light beam having a first chroma in the CIE L*a*b* color space, and
- a second light beam is transmitted by the optical element towards the scene, the second light beam having a second chroma in the CIE L*a*b* color space,
- the second chroma is smaller than 10 in the CIE L*a*b* color space, and
- the absolute difference between the second chroma and the first chroma is greater than 6.

In an example, over the 475 to 650 nm range, the optical element has a luminous absorbance smaller than 0.2^{∗}TvD65 when exposed to light conditions corresponding to standard illuminant D65 and relative visual attenuation coefficients, for recognition/detection of incandescent signal lights, are not less than 0.8 for Qred, 0.6 for Qyellow, 0.6 for Qgreen, and 0.6 for Qblue.

In another example, over the 475 to 650 nm range:
- when the optical element has a luminous transmission greater than 0.43* TvD65 when exposed to light conditions corresponding to standard illuminant D65, the absolute difference between the second chroma and the first chroma is greater than 7 in the CIE L*a*b* color space,
- when the optical element has a luminous transmission is between 0.18 and 0.43^{∗} TvD65 when exposed to light conditions corresponding to standard illuminant D65, the absolute difference between the second chroma and the first chroma is greater than 6 in the CIE L*a*b* color space.

As a result, the optical element is compliant with the standards for driving as defined in the latest version of ISO12312 at the date of filing.

According to an embodiment of the invention, the first light beam have a first hue in the CIE L*a*b* color space, and the second light beam have a second hue in the CIE L*a*b* color space, the absolute difference between the second hue and the first hue is smaller than 67, preferentially smaller than 50 in the CIE L*a*b* color space.

According to an embodiment of the invention, the optical element of any of the precedent claims, wherein the first light beam have a first hue in the CIE L*a*b* color space, and the second light beam have a second hue in the CIE L*a*b* color space, the absolute difference between the second hue and the first hue is greater than 20, and each first chroma and second chroma being greater than 10 in the CIE L*a*b* color space.

In an example, the dye composition comprises a combination of absorptive dyes. The optical properties of each absorptive dye as well as their relative proportions in the dye composition allow fine-tuning the absorption spectrum of the dye composition.

The above optical element comprises according to an embodiment of the invention, at least one absorptive dye that is activable. The various types of activable dyes are well known to the person of ordinary skill in the art. As a result, the optical element may be switchable between different configurations i.e. switchable between an active and an inactive states upon an external source such as an external light source, such as photochromic or electrochromic type dye.

In addition, in one configuration at least, at least one of the first chroma and the second chroma is smaller than 10, and the absolute difference between the second chroma and the first chroma is greater than 6.

In this regard, another aspect of the invention relates to an optical equipment comprising at least:
- the above optical element wherein at least one absorptive dye is activable, and
- a processing circuit, the processing circuit comprising a processing unit, a non-transitory storage medium, and a communication module,
   the processing circuit being configured to receive an input command and trigger, in response, an activation or a deactivation of the at least one absorptive dye so that the optical equipment switches from or to a configuration where preferably at least one of the first chroma and the second chroma is smaller than 10, and the absolute difference between the second chroma and the first chroma is greater than 6.

Another aspect of the invention relates to a method for determining a dye composition, the method comprising:
- obtaining a skin reflectance, a first target chroma and a second target chroma,
- preferably at least one of the first target chroma and the second chroma being smaller than 10 in the CIE L*a*b* color space,
- the absolute difference between the second target chroma and the first target chroma being greater than 6 in the CIE L*a*b* color space; and
- applying a non-linear least squares analysis to a plurality of absorptive dyes of a dye database to determine a dye composition comprising at least one absorptive dye from the dye database such that, when the dye composition is incorporated in an optical element worn by a wearer having said skin reflectance and the optical element is illuminated by a light source from a scene,
- a first light beam is transmitted by the optical element towards the wearer, the first light beam having a first chroma in the CIE L*a*b* color space equal to the first target chroma, and
- a second light beam is transmitted by the optical element towards the scene after being reflected by the skin of the wearer, the second light beam having a second chroma in the CIE L*a*b* color space equal to the second target chroma.

Therefore, the method allows determining, for any skin reflectance, thus for any skin tone, a dye composition that looks different, when incorporated in an optical element worn by a wearer having said skin tone, to the wearer than to an observer. The inventors have found the non-linear least square analysis to be the most appropriate type of optimization algorithm, in terms of required computing time to convergence, in order to determine the dye composition.

Another aspect of the invention relates to a method for manufacturing a dyed optical element, the method comprising dyeing an optical element with the above determined dye composition.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
FIG. 1 depicts an exemplary optical element being worn by a wearer and further being illuminated by a light source from a scene.
FIG. 2a depicts an exemplary total skin reflectance spectrum of a so called NIST skin between , and FIG. 2b, a total skin reflectance of a so called Pantone SkinTone (TM) 2R05SP, close to NIST skin
FIG. 3 depicts, for an exemplary optical element, spectra respectively corresponding to an inward look and to an outward look when the optical element is worn by a wearer whose skin has an exemplary skin reflectance spectrum of the Pantone SkinTone^{™} 2R05SP kind.
FIG. 4 depicts an exemplary optical equipment.
FIG. 5 to FIG.12 depicts, respectively for eight exemplary optical elements, spectra respectively corresponding to an inward look and to an outward look when the optical element is worn by a wearer whose skin has an exemplary skin reflectance spectrum of the Pantone SkinTone^{™} 2R05SP kind.

### DETAILED DESCRIPTION OF THE INVENTION

In the description which follows the drawing figures are not necessarily to scale. In particular, the relative dimensions of cavities with respect to rigid elements may be exaggerated. Certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a system and conversely, all the technical features relative to a system can be transposed, individually or in combination, to a process.

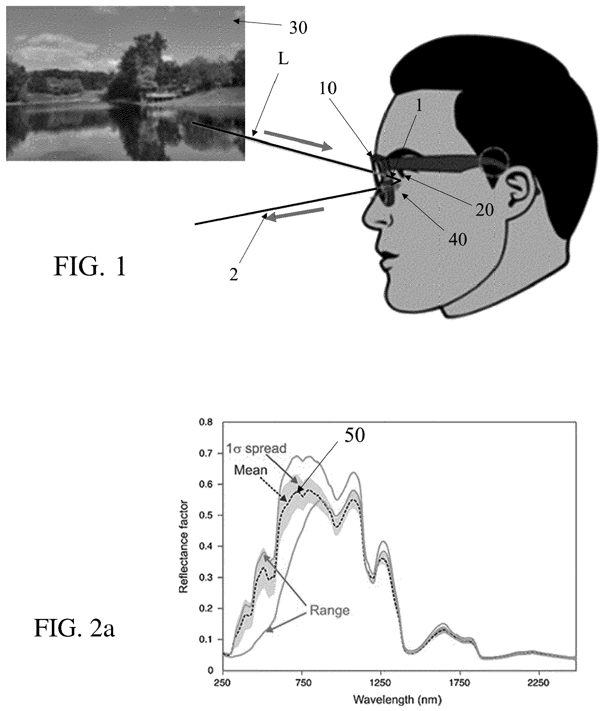

It is now referred to FIG. 1, which depicts an exemplary optical element (10), which is more specifically an ophthalmic lens of a pair of eyeglasses.

An ophthalmic lens has two opposite main surfaces: hereafter eyeball-side and object-side.

The eyeball-side main surface is to face an eye of a wearer when worn, while the object-side main surface is to face an object, or a scene, which is to face the object or scene that a wearer views through the ophthalmic lens when worn.

It is further assumed that the optical element (10) is tinted. The tint is obtained from a dye composition comprising, at least, one absorptive dye or a combination of different absorptive dyes. Generally speaking, the tint of the optical element is defined so as to reduce the visible light transmission Tv of illuminant D65 to respect specific categories of sunglasses:
- an optical element having 80% or more visible light transmission Tv, also referred to as a "category 0" optical element
- an optical element having between 46% and 79% visible light transmission Tv, also referred to as a "category 1" optical element
- an optical element having between 18% and 45% visible light transmission Tv, also referred to as a "category 2" optical element.

On FIG. 1, the eyeglasses are depicted being worn by a wearer and illuminated by one or more light sources from a scene (30).

A light path (L) is further depicted and corresponds to a light beam originating from one of such light sources and illuminating the object-side main surface optical element (10).

A first light beam (1) is transmitted by the optical element (10) towards the wearer and illuminates, at least, an eye (20) of the wearer.

A light path corresponding to the first light beam (1) is further depicted on FIG. 1 as originating from the object-side main surface of the optical element (1) and illuminating a patch of skin (40) surrounding an eye (20) of the wearer.

The color of the first light beam (1) as perceived by the wearer is affected by the tint of the optical element. In other words, the color of the first light beam depends on the nature of the dye composition.

The first light beam (1) is at second diffusively reflected by the skin (40) of the wearer towards the eyeball-side main surface of the optical element (10), and is then at third transmitted through the optical element (10), as a second light beam (2) back towards the scene (30).

A light path corresponding to the second light beam (2) is further depicted on FIG. 1 as being transmitted from the skin (40) and eyeball of the wearer, through the optical element (10) and originating from the object-side main surface of the optical element (1) and directed towards the scene (30).

Since the second light beam (1) corresponds to the light beam originating from the scene (30) being subjected to a double transmission through the optical element (10) combined to a diffusive reflection by the skin (40) of the wearer, the color of the second light beam (2) is affected not only by the tint of the optical element, but also by the reflectance of the skin (40) of the wearer. Moreover, it is affected by the internal reflexions existing at each interface of successive materials with refractive indexes different one another, defined in the optical element.

As a general consideration, the following terminology is used throughout this document:
- the first light beam has a first chroma, noted C*, and a first hue, noted H*, in the CIE L*a*b* color space, which corresponds to an "inward look" noted T%, that is to say, related to light transmitted by the optical element towards the wearer,
- the second light beam has a second chroma, noted C**, and a second hue, noted H**, in the CIE L*a*b* color space, which corresponds to an "outward" look, noted R%, that is to say, related to light that is transmitted by the optical element through the wearer, then diffusively reflected by the skin/eyeball of the wearer, then transmitted again by the optical element towards the scene, for example towards an observer facing the wearer, and
- the difference between the second chroma and the first chroma is noted Cboost = C** - C* and the difference between the second hue and the first hue is noted Hboost = H** - H*.

Two embodiments are developed thereafter:
- in the first one, the inward look is weakly colored, "natural" or greyish and corresponds to a low first chroma C*perceived by the wearer, and the outward look is much more saturated and fashionable, thus corresponds to a much higher second chroma C** perceived by an observer, As a result, a "positive boost" in color occurs for the outward light beam compared to the inward light beam, or
- on the contrary, in the second one the inward look exhibits a high first chroma C*, thus enhancing perception of a specific color for the wearer, while the outward look corresponds to a much lower second chroma C** so that the color perception of an observer viewing the eye of the wearer is almost unaffected by the presence of the optical lens (10) while the color perception of the wearer is maximized. As a result, a "negative boost" that is to say a dimming in color occurs for the outward light beam compared to the inward light beam.

In both embodiments, the difference between the inward (T%) look and the outward (R%) look is maximized and the Cboost is an integer different from 0, positive in the first above embodiment, and negative in the second one.

There are several factors that may be of influence to optimize the inward and the outward look to be different.

One of them is any amendment of the natural reflectance curve of the skin of the wearer, for example through use of make-up.

Another factor is the use of interferential coatings but this approach, requiring complex and expensive manufacturing steps will be disregarded.

This last factor is outside the scope of the present invention and will not be further developed, since for the purpose of optimizing the difference between the inward and the outward look of the light beam the invention is exclusively based on the optimization of a dye composition and excludes for this aim the use interferential coatings.

Yet another factor which may be influenced in order to maximize the difference between the inward (T%) and the outward (R%) look is the design of the optical element (10). More specifically, the transmission curve of the optical element may be adapted through choosing a specific dye composition. On a side note, it is to be noted that the transmission curve of the optical element is always strictly the same in both directions, as specified by the laws of physics.

Different specific exemplary optical elements are described throughout this document and values of C*, C** and absolute Cboost values corresponding to these exemplary optical elements are provided.

C* is intrinsic to the transmission curve of the optical element (10).

C** and Cboost are affected by the reflectance of the skin of the wearer, which is extrinsic to the optical element (10), and by internal reflexions and interferences at the different interfaces of the different materials constituting and surrounding (air) the optical element. The reflectance of the skin of the wearer is different for each individual.

As a matter of fact, according to the invention, the transmission curve of the optical element (10) is customized for a particular individual's skin, or for a particular type of skin shared by a group of individuals, through choosing a specific dye composition.

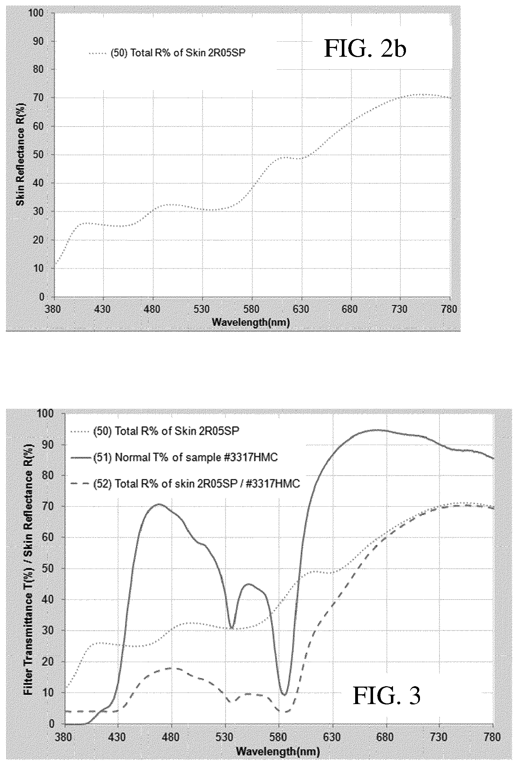

For the sake of example, the specific values of C** and Cboost disclosed in this document always account for a "reference skin reflectance" corresponding to a "reference wearer", i.e. a construction of mind rather than an actual wearer. The skin reflectance of the "reference wearer" corresponds to the mean skin reflectance spectrum (50) (i.e. the skin reflectance as a function of wavelength) taken from the "reflectance measurements of human skin" study by NIST, a photo caption of which is accessible at https://www.nist.gov/programs-projects/reflectance-measurements-human-skin at the date of filing and reproduced on Fig. 2.

In order to maximize the difference between the inward (T%) and the outward (R%) look, the dye composition is specifically configured, accounting for at least one given skin reflectance corresponding either to an actual wearer or to the reference wearer, so that at least one of the first chroma and the second chroma is preferably smaller than 10 and the absolute difference between the second chroma and the first chroma is greater than 6. This can only be achieved with a dye composition configured to filter the exact right wavelengths according to the skin reflectance which is taken in consideration.

Having one of the first chroma and the second chroma be smaller than 10 allows one of the inward look or the outward look to be neutral color-wise.

Having both the first chroma and the second chroma be greater than 10, and the first hue and second hue greater than 20 allows both of the inward look and the outward look to be color-wise and perceived as being different in color one another.

Having the absolute difference ICboostl between the first chroma and the second chroma be greater than 6 allows the inward look and the outward look to be noticeably respectively two different color-wise for a human eye, one of them being possibly neutral or greyish.

Having also the absolute difference |Hboost| between the first hue and the second hue be greater than 6, and each of the first chroma and the second chroma superior to 20, allows the inward look and the outward look to be each perceived as having a specific color-wise (hue) for a human eye.

In some exemplary embodiments, the dye composition is configured so that ICboostl is greater than a threshold value that is higher than 6, for example 7, 8, 9, 10, 11, 12, 13, 14, 15, 16, etc.

An exemplary method for determining a dye composition meeting above the requirements is described thereafter.

The transmission spectra of a plurality of absorptive dyes are obtained, for example calculated or retrieved from a dye database. Said absorptive dyes may include real, existing dyes available in the market. Said absorptive dyes may further include so-called "perfect" dyes, which absorb light only across a limited wavelength range, for example a 20 nm wavelength range. For instance a "perfect dye" has a uniform absorbance across said limited wavelength range and can be created specifically in function of the limited wavelength range targeted from a specific chemical composition by a specialized company (Exciton, Epolin,..). Said absorptive dyes may include dyes that are activable, i.e. that change color upon activation. Examples include temperature-sensitive dyes that are activated by a change in temperature, electroactive dyes that are activated upon application of a difference of potential, piezoelectric dyes that are activated upon application of a pressure, photochromic dyes that are activated upon application of a difference of light, etc.

By combining the retrieved transmission spectra of such absorptive dyes, it is possible to determine the transmission spectrum of various dye compositions. More specifically, a dye composition is defined as comprising any combination of a plurality of said absorptive dyes in any respective proportion. As a result, it is possible to calculate the first chroma C* and the first hue H* of light transmitted through an optical element tinted with a given dye composition.

In addition, a skin reflectance spectrum as depicted in the figure 2a or 2b is considered for a given person or group of person. The skin reflectance spectrum corresponds to a specific skin tone which relates for example to a specific wearer, or to a reference wearer.

Considering a given transmission spectrum of a given dye composition, a given skin reflectance spectrum, and given materials of different layers constituting an optical element (base substrate, hard coating, anti-reflective coatings, anti-static coatings...), it is possible to derive the second chroma C** and the second hue** of light transmitted through an optical element tinted with a given dye composition, then reflected by a skin having a given skin reflectance spectrum, then transmitted again through the optical element.

In one illustrative embodiment, the outward light beam spectrum could be modeled by:

(T%optical element ^{∗} R%skin ^{∗} T% optical element) + R% interferentials at the difference interfaces

Various optimization methods allow determining a dye composition which meets specific predetermined requirements regarding the first chroma C* and the second chroma C**. According to the requirements defined above, a first target chroma and a second target chroma are obtained, or defined, such that preferably at least one of the first target chroma and the second chroma is smaller than 10 in the CIE L*a*b* color space and the absolute difference between the second target chroma and the first target chroma is greater than 6 in the CIE L*a*b* color space. Additional requirements and constraints may be further defined. An example of an additional requirement may be preset values for a first target hue or for a second target hue. An example of an additional constraint may be that the dye composition shall have, in a given wavelength range, a transmittance exceeding a given threshold.

Generally speaking, optimization methods involve testing various dyes compositions. Testing a dye composition involves determining, for this composition, at least the values of the first chroma C* and of the second chroma C**, as well as the values of any additional relevant parameter with regard to the predetermined requirements or constraints, such as H* and H*.

Examples of such optimization methods may include a least squares analysis or a non-linear least squares analysis.

In another embodiment of the invention, the concentration of each primary coloring agent can be calculated using the subtractive mixing method well known to the person skilled in the art. It is then possible to manufacture the lens, after selecting its color from the color range established in the manner previously described.

Several tested dye compositions may differ from one another regarding the nature of the dyes they comprise. In this regard, an objective may be to select appropriate dyes to be combined in a dye composition.

In addition, several tested dye compositions may have the same constituents, and only differ from one another regarding the relative proportions of the dyes they comprise. For example, a plurality of absorptive dyes may be preselected as the constituents of the dye composition to be determined, and a stage of the optimization method may be to determine the most adequate relative proportion of the preselected dyes, i.e. the proportion allowing the closest match between the first chroma C* and the first hue H* as calculated and respectively the first target chroma and the first target hue, as well as the closest match between the second chroma C** and the second hue H** as calculated and respectively the second target chroma and the second target hue.

For example, the optimization method may be a multiple stage method. The purpose of the first stage may be to determine, among a plurality of candidate dyes, a first absorptive dye having the closest match to the constraints and requirements. The purpose of the second stage may be to identify, among the candidate dyes other than the first dye, a second absorptive dye so that a combination of the first absorptive dye and the second absorptive dye, in specific relative proportions, exhibits the closest match to the constraints and requirements. Further stages may allow further refining the dye composition by adding one more constituent at a time.

Once the dye composition is determined, an optical element (10) comprising said dye composition may be manufactured. For example, the dyes of the dye composition may be inserted in the substrate of an ophthalmic lens, for example in a Trivex substrate, or in an additional layer covering the substrate, for example an epoxy layer.

It is referred to figure 3, which shows, for an exemplary optical element (10), a first spectrum (51) corresponding to the inward look (T%). The first spectrum is the spectrum of the first light beam (1) in a situation where a first light beam (1) is transmitted through said optical element (10) towards a wearer when said optical element is illuminated by a white light source corresponding to standard illuminant D65 from a scene.

Figure 3 also shows a second spectrum (52) corresponding to the outward look (R%). The second spectrum is, in the situation above, the spectrum of the second light beam (2) transmitted back to the scene when the first light beam (1) is diffusively reflected towards the optical element (10) according to the reference skin reflectance spectrum.

Figure 3 also shows, for reference, the reference skin reflectance spectrum (50) taken into account.

Table 1 below indicates a series of values corresponding respectively to the first spectrum (51) and to the second spectrum (52) depicted in figure 3 and more specifically, the values for L*, a*, b*, first chroma C*, second chroma C**, first hue H* and second hue H** in the CIE L*a*b* color space are indicated at 10° of incident angle, along with corresponding RGB values. Table 1 also indicates the luminous transmittance and the luminous reflectance, noted respectively Tv(%) and Rv(%), of the optical element (10) when illuminated by a white light source corresponding to standard illuminant D65 at 2° of incident angle, as shown in the below Table 1.

The light transmission measurements were carried out on samples in the form of disks 25 mm in diameter and 1.5 mm in thickness, constituted by a Trivex substrate, on each first surface and second surface of which an HMC coating (Crizal Sun on both concave & convex side) is deposited, by using a Cary50 spectrometer marketed by Varian from a sample, with a Pantone 2R05SP artificial skin sample placed against (0 mm distance) the surface of the optical element opposite to the illuminant (second surface).

| | L | a | b | chroma | hue | R | G | B | (%) |
|---|---|---|---|---|---|---|---|---|---|
| (51) | 75 | 6 | -2 | 6 | 345 | 194 | 181 | 186 | Tv=47 |
| (52) | 39 | 20 | 7 | 21 | 21 | 210 | 135 | 136 | Rv=11 |

In this example, as seen on the spectrum of the figure 3, the dye composition is optimized to emphasize the red tint of the skin of the reference wearer:
- the second spectrum (52) shows that bluish wavelengths are significantly absorbed by the optical element (10): the outward look (R%) is saturated red, with a high chroma value C** over 21
- whereas reddish and bluish wavelengths of the first spectrum (51) are transmitted and the inward look (T%) is weakly and even almost not colored with a low chroma value C* of 6 of the purple/greyish color. Thus the first spectrum (51) shows that a significant portion of both bluish and reddish wavelengths are transmitted by the optical element (10) towards the wearer: the inward look (T%) is neutral grey, with a low chroma value C* under 6.

As a result, Cboost is over 15.

This can only be achieved with a dye composition configured to filter the exact right wavelengths according to the skin tone taken in consideration.

More generally, using a combination of known dyes, it is possible to optimize a dye composition to be included in an optical element (10) for the purpose of the optical element (10), when worn, to look more chromatic to an observer than to the wearer. More specifically, in this regard, the dye composition may be optimized so that:
- the inward look (T%), resulting from the transmission spectrum of the dye composition, corresponds to a first chroma C* below 10, for example below 6 while
- the outward look (R%), resulting from the combination of the transmission spectrum of the dye composition and of the reflectance spectrum of the skin of the reference wearer, and any internal reflexion at the interfaces of the different layers of material constituting the optical element and air, corresponds to a second chroma C** greater than the first chroma C*, with Cboost = C** - C* ≥ 6. A second chroma C** greater than 15 is particularly sought.

For example, the dye composition may be optimized such that Cboost is preferably greater than 10 for an optical element having 80% or more visible light transmission Tv, also referred to as a "category 0" optical element.

For example, the dye composition may be optimized such that Cboost is preferably greater than 15 for an optical element having between 46% and 79% visible light transmission Tv, also referred to as a "category 1" optical element.

For example, the dye composition may be optimized such that Cboost is preferably greater than 16 for an optical element having between 18% and 45% visible light transmission Tv, also referred to as a "category 2" optical element.

The possible colors for the outward look (R*) are largely related to the tone of the skin of the wearer. The reference skin reflectance spectrum (50) corresponds to a Caucasian skin, that has an orange-red hue.

As a result, by calculating an ideal - theoretical - transmission curve allowing a maximum value of Cboost for a reference wearer, the second spectrum (52) that would be obtained with a dye composition having such transmission curve corresponds to an orange-red hue.

By calculating other possible theoretical transmission curves that allow a positive value of Cboost for a reference wearer, the second spectra (52) that are obtained with dye compositions having these other possible transmission curves, correspond to a mixture of at least one red wavelength and of at least one other (non-red) wavelength. The resulting possible colors for the outward look (R*) for a reference wearer are thus centered on red (H** = 30°) on the CIE L*a*b color wheel, and may extend from yellow (H** = 90°) to violet (H** = 340°).

With combinations of theoretical dyes, the highest calculated values of Cboost for different given values of second hues H**, accounting for the reference skin reflectance spectrum, are shown in table 2 below for above mentioned HMC lenses.

**Table 2**

| H** | Cat.2, Tv=40% | Cat.1, Tv=60% | Cat.0, Tv=90% |
|---|---|---|---|
| Yellow (90°) | 12 | 16 | 12 |
| Orange (50°) | 24 | 21 | 19 |
| Red (30°) | 24 | 21 | 15 |
| Violet (340°) | 7 | 5 | 0 |

Other calculations have been performed with the additional constraints of allowing only combinations of commercialised dyes, rather than above mentioned perfect dyes, and complying with road use requirements for ophthalmic lenses. According to the most recent version of ISO12312 at the date of filing, for example, these requirements specify that over the 475 to 650 nm range, an ophthalmic lens shall have a luminous absorbance smaller than 0.2^{∗}TvD65 (or conversely a luminous transmittance greater than 0.8^{∗}TvD65) when exposed to light conditions corresponding to standard illuminant D65 and relative visual attenuation coefficients, for recognition/detection of incandescent signal lights, are not less than 0.8 for Qred, 0.6 for Qyellow, 0.6 for Qgreen, and 0.6 for Qblue.

As a result of these calculations, the highest calculated values of Cboost for different given hues, accounting for the reference skin reflectance spectrum, while also allowing compliance to road use requirements, are shown in table 3 below.

**Table 3**

| Hue h* | Cat.2, Tv=40% | Cat.1, Tv=60% | Cat.0, Tv=90% |
|---|---|---|---|
| Yellow (90°) | 10 | 10 | 12 |
| Orange (50°) | 13 | 18 | 17 |
| Red (30°) | 18 | 18 | 16 |
| Violet (340°) | 7 | 5 | - |

Table 4 below indicates a series of values associated to twelve exemplary optical elements (10) which, when worn by the reference wearer, look more chromatic to an observer than to the wearer.

**Table 4**

| | C* _{10°} | h* _{10°} | R | G | B | Tv_{D65} % | C** _{10°} | h** _{10°} | C boost |
|---|---|---|---|---|---|---|---|---|---|
| #1 | 1 | 59 | 172 | 170 | 167 | 39 | 26 | 38 | 24 |
| #2 | 8 | 335 | 192 | 176 | 186 | 45 | 23 | 24 | 14 |
| #3 | 6 | 345 | 194 | 181 | 186 | 47 | 24 | 20 | 18 |
| #4 | 5 | 51 | 181 | 171 | 166 | 41 | 23 | 37 | 18 |
| #5 | 4 | 341 | 207 | 200 | 202 | 59 | 21 | 30 | 18 |
| #6 | 2 | 91 | 169 | 167 | 161 | 39 | 16 | 58 | 13 |
| #7 | 4 | 102 | 205 | 204 | 195 | 60 | 22 | 52 | 18 |
| #8 | 4 | 54 | 178 | 170 | 165 | 40 | 27 | 52 | 24 |
| #9 | 9 | 132 | 164 | 173 | 157 | 40 | 19 | 93 | 10 |
| #10 | 10 | 110 | 202 | 202 | 181 | 60 | 20 | 92 | 10 |
| #11 | 5 | 287 | 163 | 164 | 171 | 36 | 12 | 353 | 7 |

More specifically, each exemplary optical element (10) is referred to using a corresponding identifier ID. The identifiers range from #1 through #12.

For each optical element so identified:
- with respect to the inward look (T%), the values of the first chroma (C*) and the first hue (H*) in the CIE L*a*b* color space are indicated, along with RGB values,
- with respect to the outward look (R%), the second chroma (C**) and second hue (H**) in the CIE L*a*b* color space are indicated accounting for a skin reflectance corresponding to the reference skin reflectance spectrum, and
- the luminous transmittance, noted Tv(%), of said optical element (10) when illuminated by a white light source corresponding to standard illuminant D65, is also indicated.

The inward look (T%) for all the exemplary optical elements (10), corresponds to a first chroma C* below, or equal to, 10, thus appears natural and grey to a wearer.

In addition, the outward look (R%) for all the exemplary optical elements (10) corresponds to a second chroma C** such that Cboost = C** - C* is greater than 6. The second hue H** is noticeably different among the exemplary optical elements (10). Indeed, accounting for the reference skin reflectance spectra, #1 through #5 appear red to an observer while #6 through #8 appear orange, #9 and 10 appear yellow and #11 and #12 appear violet.

In yet another embodiment, it is possible, using a combination of known dyes, to optimize a dye composition to be included in an optical element (10) for the purpose of the optical element (10) to look, when worn, perceivably more chromatic to the wearer than to an observer. For example, when worn, the optical element (10) may look grey to an observer, but colorful, such as blue, for the wearer.

In order to increase this effect, one can combine the optical element (10) with specific make-up that has a similar spectrum management. For example, one can wear eyeglasses with green lenses that inhibits visualization by an observer of a somewhat green make-up, which only fully appears when the eyeglasses are removed.

More specifically, in this regard, the dye composition may be optimized so that:
- the inward look (T%), resulting from the transmission spectrum of the dye composition, corresponds to a first chroma C*, while
- the outward look (R%), resulting from the combination of the transmission spectrum of the dye composition and of the reflectance spectrum of the skin of the reference wearer, corresponds to a second chroma C** smaller than the first chroma C* and also smaller than 10,
   with Cboost = C** - C* ≤ - 6.

As already mentioned, the second chroma C** and second hue H** depend not only on the transmission spectrum of the dye composition, but also on the reflectance spectrum of the skin of the wearer.

As a result, for the optical element (10) to look greyish, when worn, for an observer, but colorful to the wearer, the maximum possible absolute value for Cboost, noted ICboostl is obtained when the first hue (H*) is the complement of the skin hue of the wearer.

The complement of the orange-red hue (30° hue) corresponding to the reference skin reflectance curve is turquoise (210° hue). Therefore, in this case, the highest possible value of ICboostl is obtained with the first hue H* being around 210° (turquoise). The possible values of the first hue H* which allow Cboost = C** - C** ≤ - 6 and C** < 10 range from 150° (green) to 270° (blue).

Values of Cboost have been calculated using combinations of theoretical dyes, using as a constraint different given values of the first hue H* and accounting for the reference skin reflectance spectrum. The values are shown in table 5 below.

**Table 5**

| H* | Cat.2, Tv=40% | Cat.1, Tv=60% | Cat.0, Tv=90% |
|---|---|---|---|
| Yellow (90°) | >0 | >0 | >0 |
| Green (150°) | -14 | -8 | >0 |
| Turquoise (210°) | -21 | -15 | -6 |
| Blue (270°) | -18 | -11 | >0 |

Values of Cboost have further been calculated using combinations of existing dyes taken from a library, using as constraints different given values of the first hue H*, compliance with road use requirements, and accounting for the reference skin reflectance spectrum. The values are shown in table 6 below.

**Table 6**

| H* | Cat.2, Tv=40% | Cat.1, Tv=60% | Cat.0, Tv=90% |
|---|---|---|---|
| Green (150°) | -11 | -9 | >0 |
| Turquoise (210°) | -9 | -10 | -5 |
| Blue (270°) | -9 | -6 | >0 |

It is seen that, as mentioned above:
- a yellow first hue H* is incompatible with the requirement of having Cboost be lower than -6,
- a turquoise first hue H* yields the best results, being compatible with said requirement even for a cat.0 optical element (10), and
- a green or a blue first hue H* is also compatible with said requirement, though provided the luminous absorbance of the dye composition is sufficiently high.

Table 7 below indicates a series of values associated to six exemplary optical elements (10) which, when worn by the reference wearer, look chromatic for either the wearer or an observer, and neutral for the other subject considered.

**Table 7**

| | C* _{10°} | h* _{10°} | R | G | B | Tv_{D65} % | C** _{10°} | h** _{10°} | C boost |
|---|---|---|---|---|---|---|---|---|---|
| #13 | 22 | 270 | 151 | 176 | 212 | 40 | 6 | 285 | -16 |
| #14 | 19 | 270 | 186 | 207 | 240 | 59 | 8 | 300 | -11 |
| #15 | 6 | 41 | 195 | 181 | 176 | 49 | 18 | 61 | +12 |
| #16 | 13 | 231 | 197 | 230 | 242 | 74 | 2 | 165 | -11 |
| #17 | 22 | 210 | 117 | 184 | 191 | 40 | 8 | 169 | -14 |
| #18 | 22 | 210 | 147 | 213 | 220 | 58 | 7 | 187 | -15 |

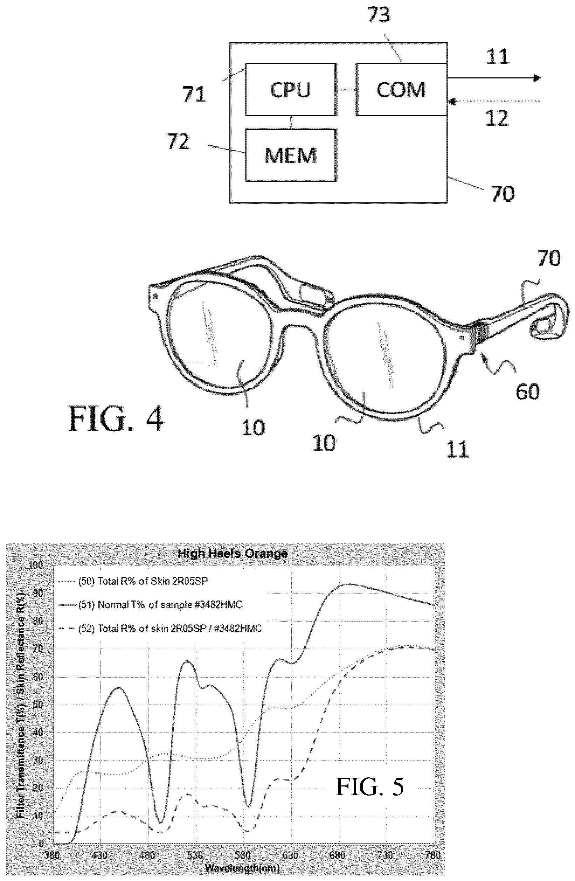

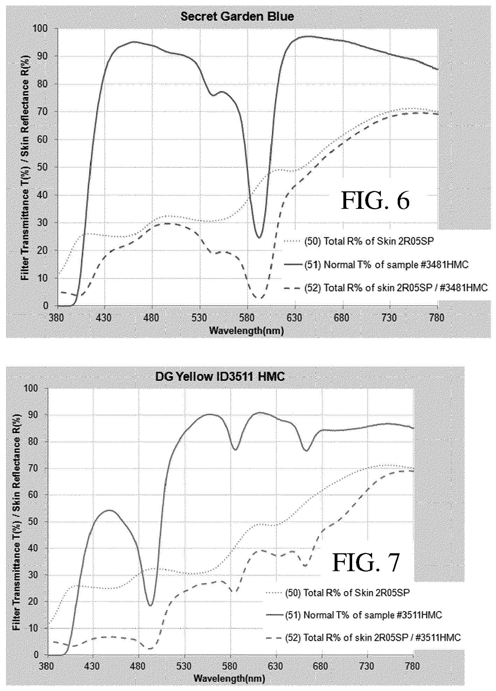

More specifically, each exemplary optical element (10) is referred to using a corresponding identifier ID. The identifiers range from #13 through #18. For the wearer, identifiers #13 and #14 correspond to blue-looking optical elements, identifiers #15 to orange-looking (figure 5), and identifiers # 16 (figure 6), #17 and #18 to turquoiselooking optical elements. For the observer looking at the skin of the wearer across the optical element, they appear to be neutral (C** between 2 and <10). They all have a negative Cboost value (between -16 and -7)

On the contrary, identifier # 15 (figure 5), looks orange for the observer looking at the skin of the wearer across the optical element (C** of 18) and is perceived neutral for the wearer C* below 10 i.e. 6. It defines a positive Cboost value.

Instead of the above examples wherein one of the inward or the outward light beam has an almost not perceptible color (neutral or greyish color with a chroma below 10), in the below examples illustrated in the Table 8, at least perceptible color in each of Inward and Outward light beam is defined while either the Inward or Outward light beam defines a more saturated color-wise (absolute value of Cboost >6, preferably superior to 10, more preferably to 20).

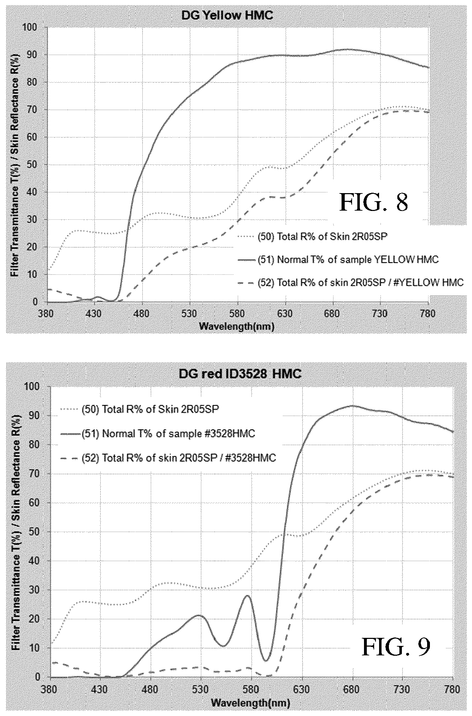

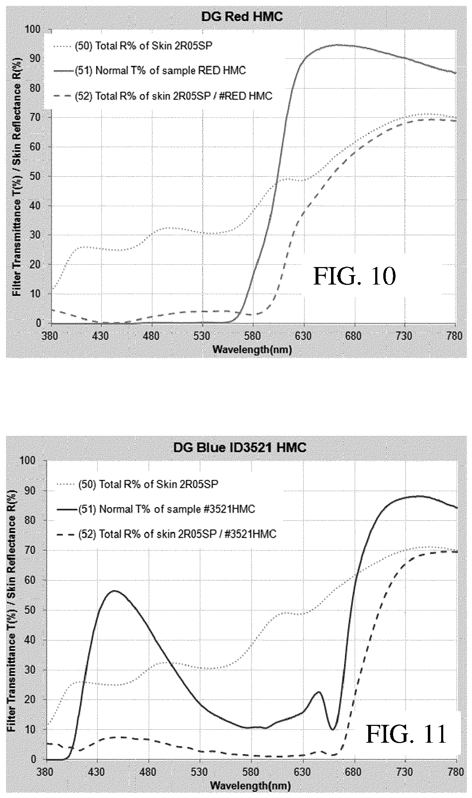

More precisely, in these examples, each of C* and C** are above 10 but in function of the color-wise C* and C** are defined below a predetermined value to define said at least perceptible color:
- For yellow color-wise, one of C* or C** below than 30, preferably below than 40 (ID17, figure 7),
- For red color-wise, both C* and C** below than 45, preferably below than 50, (ID19, figure 9),
- For blue color-wise, both C* and C** below than 30, preferably below than 35, (ID21, figure 11)
- For green color-wise, both C* and C** below than 20, (ID23 and ID 24 not illustrated)

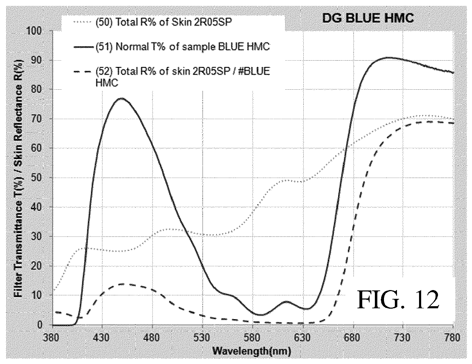

On the contrary, in the same Table 8 in some other examples, both inward and outward light beam have color-wise strongly perceived with a chroma defined above a predetermined value in function of the chosen color-wise, for example:
- For yellow color-wise, both C* and C** greater than 30, preferably greater than 40 (ID18, figure 8),
- For red color-wise, both C* and C** greater than 45, preferably greater than 50, (ID20, figure 10),
- For blue color-wise, both C* and C** greater than 30, preferably greater than 35, (ID22, figure 12).

**Table 8**

| | C* _{10°} | h* _{10°} | R | G | B | Tv_{D65} % | C** _{10°} | h** _{10°} | C boost |
|---|---|---|---|---|---|---|---|---|---|
| #17 Fig.7 | 28 | 83 | 254 | 224 | 173 | 80 | 46 | 76 | 17 |
| #18 Fig.8 | 77 | 96 | 250 | 228 | 65 | 79 | 66 | 81 | -11 |
| #19 Fig.9 | 63 | 67 | 187 | 110 | 15 | 23 | 46 | 43 | -17 |
| #20 Fig.10 | 105 | 48 | 219 | 14 | 0 | 16 | 54 | 48 | -51 |
| #21 Fig.11 | 41 | 277 | 77 | 123 | 190 | 18 | 20 | 264 | -21 |
| #22 Fig.12 | 58 | 272 | 0 | 127 | 220 | 17 | 32 | 273 | -25 |
| #23 Not illustrated | 22 | 150 | 142 | 181 | 150 | 40 | 10 | 116 | -12 |
| #24 Not illustrated | 20 | 150 | 176 | 212 | 183 | 59 | 13 | 110 | -7 |

For each optical element so identified:
- with respect to the inward look (T%), the values of the first chroma (C*) and the first hue (H*) in the CIE L*a*b* color space are indicated, along with RGB values,
- with respect to the outward look (R%), the second chroma (C**) and second hue (H**) in the CIE L*a*b* color space are indicated accounting for a skin reflectance corresponding to the reference skin reflectance spectrum, and
- the luminous transmittance, noted Tv(%), of said optical element (10) when illuminated by a white light source corresponding to standard illuminant D65, is also indicated.

It is now referred to figure 4, which depicts an exemplary optical equipment.

The optical equipment (60) comprises at least one optical element (10) and a processing circuit (70). For example, the optical equipment may be a pair of eyeglasses, as a pair of optical elements, mounted on a spectacle frame encasing the processing circuit.

The optical element (10) comprises a dye composition comprising at least one activable absorptive dye.

The optical element (10) further comprises an activation module (11) configured to activate or deactivate at least one activable absorptive dye upon receiving a corresponding output command. As a result, the optical element (10) may be switchable between different configurations. Each configuration is associated to a corresponding transmission spectrum, thus to a specific combination of an inward look (T%) and an outward look (R%).

In at least one configuration, the dye composition is further configured so that, when the optical element (10) is worn by a wearer having a given skin reflectance and is illuminated by a light source from a scene (30):
- a first light beam (1) is transmitted by the optical element (10) towards the wearer, the first light beam having a first chroma in the CIE L*a*b* color space,
- a second light beam (2) is transmitted by the optical element (10) towards the scene (30) after being reflected by the skin (40) of the wearer, the second light beam having a second chroma in the CIE L*a*b* color space,
- at least one of the first chroma and the second chroma is smaller than 10, and
- the absolute difference between the second chroma and the first chroma is greater than 6.

The processing circuit (70) comprises, at least, a processing unit (71), a non-transitory storage medium (72) and a communication interface (73).

The communication interface (73) may interact with a human-machine interface (12) to receive an input command, indicating a request to switch at least one optical element (10) from a current configuration to a desired configuration. The human-machine interface may be part of the optical equipment (60) and may be formed as a button or a slider. Alternately, the human-machine interface may be part of a remote device, such as a user terminal, configured to transmit, through a communication channel, the input command to the communication interface (73) of the optical equipment (70).

Such an input command may be processed by the processing circuit, based on instructions of a computer program stored on the non-transitory storage medium, so that an output command is generated. The output command is an electrical signal applied to the activation module (11) of at least one optical element (10). As a result, the activation module triggers activation or deactivation of at least one absorptive dye, and said optical element (10) switches from the current configuration to the desired configuration.

## Claims

1. An optical element (10) intended to be worn in front of an eye (20) of a human wearer, the optical element comprising a dye composition comprising at least one absorptive dye, the dye composition being configured so that, when the optical element (10) is worn by a wearer having a given skin reflectance and is illuminated by a light source from a scene (30):
- a first light beam (1) is transmitted by the optical element (10) towards the wearer, the first light beam having a first chroma in the CIE L*a*b* color space,
- a second light beam (2) is transmitted by the optical element (10) towards the scene (30) after being reflected by the skin (40) of the wearer, the second light beam having a second chroma in the CIE L*a*b* color space, and
- the absolute difference between the second chroma and the first chroma is greater than 6.

2. The optical element of the precedent claim, wherein at least one of the first chroma and the second chroma is smaller than 10, preferably smaller than 3 in the CIE L*a*b* color space.

3. The optical element of any of the precedent claims, wherein the first chroma is smaller than 10, preferably smaller than 3 in the CIE L*a*b* color space and the second chroma is greater than the first chroma, preferably greater than 20 in the CIE L*a*b* color space.

4. The optical element of the precedent claim, wherein, over the 475 to 650 nm range:
- when the optical element has a luminous transmission greater than 0.8* TvD65 when exposed to light conditions corresponding to standard illuminant D65, the absolute difference between the second chroma and the first chroma is greater than 16 in the CIE L*a*b* color space,
- when the optical element has a luminous transmission is between 0.43 and 0.8* TvD65 when exposed to light conditions corresponding to standard illuminant D65, the absolute difference between the second chroma and the first chroma is greater than 15 in the CIE L*a*b* color space, and
- when the optical element has a luminous transmission is between 0.18 and 0.43^{∗} TvD65 when exposed to light conditions corresponding to standard illuminant D65, the absolute difference between the second chroma and the first chroma is greater than 10 in the CIE L*a*b* color space.

5. The optical element of claim 1, wherein the second chroma is smaller than 10, preferably smaller than 3 in the CIE L*a*b* color space and the first chroma is greater than the second chroma preferably greater than 20.

6. The optical element of the precedent claim, wherein, over the 475 to 650 nm range:
- when the optical element has a luminous transmission greater than 0.43^{∗} TvD65 when exposed to light conditions corresponding to standard illuminant D65, the absolute difference between the second chroma and the first chroma is greater than 7 in the CIE L*a*b* color space,
- when the optical element has a luminous transmission is between 0.18 and 0.43^{∗} TvD65 when exposed to light conditions corresponding to standard illuminant D65, the absolute difference between the second chroma and the first chroma is greater than 6 in the CIE L*a*b* color space.

7. The optical element of any of the precedent claims, wherein the first light beam have a first hue in the CIE L*a*b* color space, and the second light beam have a second hue in the CIE L*a*b* color space, the absolute difference between the second hue and the first hue is smaller than 67, preferentially smaller than 50 in the CIE L*a*b* color space.

8. The optical element of any of the precedent claims, wherein the first light beam have a first hue in the CIE L*a*b* color space, and the second light beam have a second hue in the CIE L*a*b* color space, the absolute difference between the second hue and the first hue is greater than 20, and each first chroma and second chroma being greater than 10 in the CIE L*a*b* color space.

9. The optical element of any of the precedent claims, wherein, over the 475 to 650 nm range, the optical element has a luminous absorbance smaller than 0.2* TvD65 when exposed to light conditions corresponding to standard illuminant D65 and wherein relative visual attenuation coefficients, for recognition/detection of incandescent signal lights, are not less than 0.8 for Qred, 0.6 for Qyellow, 0.6 for Qgreen, and 0.6 for Qblue.

10. The optical element of any of the precedent claims, wherein at least one absorptive dye is switchable between an active state and an inactive state upon an external source such as an external light source.

11. A method for determining a dye composition, the method comprising:
- obtaining a skin reflectance, a first target chroma and a second target chroma,
o the absolute difference between the second target chroma and the first target chroma being greater than 6 in the CIE L*a*b* color space; and
- applying a non-linear least squares analysis to a plurality of absorptive dyes of a dye database to determine a dye composition comprising at least one absorptive dye from the dye database such that, when the dye composition is incorporated in an optical element worn by a wearer having said skin reflectance and the optical element is illuminated by a light source from a scene,
o a first light beam is transmitted by the optical element towards the wearer, the first light beam having a first chroma in the CIE L*a*b* color space equal to the first target chroma, and
o a second light beam is transmitted by the optical element towards the scene after being reflected by the skin of the wearer, the second light beam having a second chroma in the CIE L*a*b* color space equal to the second target chroma.

12. A method for manufacturing a dyed optical element, the method comprising dyeing an optical element with a dye composition determined according to the method of claim 11.

13. A use of an optical element for attenuating light incoming towards an eye of a human wearer having a given skin reflectance without altering color perception of the wearer, wherein the optical element comprises at least one absorptive dye configured so that, when the optical element is worn by the wearer and is illuminated by a light source from a scene:
- a first light beam is transmitted by the optical element towards the wearer, the first light beam having a first chroma in the CIE L*a*b* color space,
- a second light beam is transmitted by the optical element towards the scene after being reflected by the skin of the wearer, the second light beam having a second chroma in the CIE L*a*b* color space, and
- the absolute difference between the second chroma and the first chroma is greater than 6.

14. A use of an optical element for enhancing color vision of a human wearer having a given skin reflectance, wherein the optical element comprises at least one absorptive dye configured so that, when the optical element is worn by the wearer and is illuminated by a light source from a scene:
- a first light beam is transmitted by the optical element towards the wearer, the first light beam having a first chroma in the CIE L*a*b* color space, and
- a second light beam is transmitted by the optical element towards the scene, the second light beam having a second chroma in the CIE L*a*b* color space, and
- the absolute difference between the second chroma and the first chroma is greater than 6.
